(19) Europäisches Patentamt
European Patent Office
Office européen des brevets

(11) Veröffentlichungsnummer: **0 000 396**
**B1**

(12) **EUROPÄISCHE PATENTSCHRIFT**

(21) Anmeldenummer: **78100379.3**

(22) Anmeldetag: **12.07.78**

(51) Int. Cl.³: **C 08 G 63/62,**
C 08 G 63/68

# (54) Verfahren zur Herstellung von flammhemmenden Polycarbonaten

(30) Priorität: **19.07.77 DE 2732556**

(43) Veröffentlichungstag der Anmeldung:
**24.01.79 Patantblatt 79/02**

(45) Bekanntmachung des Hinweises auf die Patenterteilung:
**23.07.80 Patantblatt 80/15**

(84) Benannte Vertragsstaaten:
**DE FR GB NL**

(56) Entgegenhaltungen:
**FR - A - 1 311 130**
**US - A - 4 020 045**

(73) Patentinhaber: **Bayer AG**
**Zentralbereich Patente, Marken und Lizenzen**
**D-5090 Leverkusen 1, Bayerwerk (DE)**

(72) Erfinder: **Margotte, Dieter, Dr.**
**Wedelstrasse 48**
**D-4150 Krefeld 1 (DE)**

**EP 0 000 396 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von flammhemmenden Polycarbonaten

Gegenstand der vorliegenden Erfindung ist die Herstellung von aromatischen Polycarbonaten mit mittlerem Molekulargewicht zwischen 10 000 und 100 000 nach dem bekannten Zweiphasengrenzflächenverfahren aus Diphenolen, bevorzugt aus halogenfreien Diphenolen, unter verwendung von kettenabbrechern, dadurch gekennzeichnet, daß man als Kettenabbrecher aromatische Monosulfonsäurechloride in Mengen von 2 Mol-% bis 20 Mol-%, vorzugsweise in Mengen von 2,5 Mol-% bis 10 Mol-%, bezogen auf Mole der eingesetzten Diphenole, verwendet.

Gegenstand der vorliegenden Erfindung sind außerdem die nach dem erfindungsgemäßen Verfahren erhalten aromatischen Polycarbonate.

Die erfindungsgemäß erhaltenen Polycarbonate haben eine verbesserte Flammwidrigkeit. Die Verbesserung der flammhemmenden Eigenschaften der aromatischen thermoplastischen Polycarbonate ist bereits auf verschiedene Weise versucht und auch erreicht worden, wobei allerdings gelegentlich Nachteile bei anderen Polycarbonateigenschaften in Kauf genommen werden mußten.

Gemäß DT—OS 1720 812 können auch Halogenphenole als flammfestmachende Kettenabbrecher eingesetzt werden. Nachteilig ist hierbei jedoch der für viele Anwendungszwecke nicht ausreichende Flammschutz.

Für das erfindungsgemäße Verfahren können grundsätzlich alle aromatischen Monosulfonsäurechloride verwendet werden, also beispielsweise unsubstituierte und substituierte Benzolsulfonsäurechloride, unsubstituierte und substituierte Naphthalinsulfonsäurechloride, unsubstituierte und substituierte Anthracensulfonsäurechloride und unsubstituierte und substituierte Phenanthrensulfonsäurechloride.

Als Substituenten sind in diesem Zusammenhang beispielsweise Alkyl, Cycloalkyl, Aryl oder Halogen zu verstehen.

Erfindungsgemäß geeignete Benzolsulfonsäurechloride sind die der Formel I

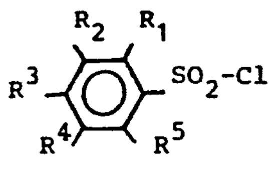

I

worin $R_1$ bis $R_5$ gleich oder verschieden sind und H, Alkyl, vorzugsweise $C_1$ bis $C_4$, Cycloalkyl, vorzugsweise $C_5$ bis $C_6$, Aryl, vorzugsweise $C_6$ bis $C_{16}$, oder Halogen, vorzugsweise Chlor oder Brom sind.

Erfindungsgemäß geeignete aromatische Monosulfonsäurechloride sind beispielsweise
Benzolsulfonsäurechlorid
2-Methylbenzolsulfonsäurechlorid
4-Methylbenzolsulfonsäurechlorid
2,4-Dimethylbenzolsulfonsäurechlorid
4-Äthylbenzolsulfonsäurechlorid
2-Äthylbenzolsulfonsäurechlorid
2-Chlorbenzolsulfonsäurechlorid
3-Chlorbenzolsulfonsäurechlorid
4-Chlorbenzolsulfonsäurechlorid
2,5-Dichlorbenzolsulfonsäurechlorid
3,4-Dichlorbenzolsulfonsäurechlorid
2-Methyl-5-chlorbenzolsulfonsäurechlorid
3-Chlor-4-methylbenzolsulfonsäurechlorid.
Diphenyl-4'-sulfonsäurechlorid
3-Methyl-diphenyl-4-sulfonsäurechlorid
3,4'-Dimethyldiphenyl-4-sulfonsäurechlorid
4'-Chlordiphenyl-4-sulfonsäurechlorid

Bevorzugt finden folgende Sulfonsäurechloride Anwendung:
Benzolsulfonsäurechlorid
4-Methylbenzolsulfonsäurechlorid
4-Chlorbenzolsulfonsäurechlorid
3,4-Dichlorbenzolsulfonsäurechlorid
Diphenyl-4-sulfonsäurechlorid
Naphthalin-2-sulfonsäurechlorid

Die Herstellung von Polycarbonaten nach dem Phasengrenzflächenverfahren ist bekannt. Man erhält die Polycarbonate durch Umsetzung von Diphenolen, insbesondere von Dihydroxydiarylalkanen bzw. -cycloalkanen mit Phosgen, wobei neben den unsubstituierten Dihydroxydiarylalkanen bzw. -cycloalkanen auch solche geeignet sind, deren Arylreste in o-Stellung zu den phenolischen Hydroxylgruppen substituiert sind. Die nach dem Phasengrenzflächenverfahren hergestellten Polycarbonate können in bekannter Weise auch verzweigt sein.

Die bekannten Katalysatoren wie beispielsweise Triäthylamin sowie die üblichen Lösungsmittel, Reaktionstemperaturen und Alkalimengen des Zweiphasengrenzflächenverfahrens sind ebenfalls geläufig. Die erfindungsgemäß hergestellten Polycarbonate haben mittlere Molekulargewichte ($M_w$ = Gewichtsmittel) zwischen 10 000 und 100 000, vorzugsweise zwischen 20 000 und 80 000, die aus der relativen Viskosität der Polycarbonate (gemessen in $CH_2Cl_2$bei 25°C und einer Konzentration von 0,5 Gew. %) ermittelt werden können.

Geeignete Diphenole sind z.B. Hydrochinon, Resorcin, 4,4'-Dihydroxydiphenyl, Bis-(hydroxyphenyl) alkane, wie beispielsweise $C_1$—$C_8$-Alkylen-bzw. $C_2$—$C_8$-Alkylidenbisphenole, Bis-(hydroxyphenyl)-cycloalkane wie beispielsweise $C_5$—$C_6$-Cycloalkylen-bzw. $C_5$—$C_6$-Cycloalkyliden-bisphenole, Bis-(hydroxyphenyl)-sulfide, -äther, -ketone, -sulfoxide oder -sulfone. Ferner $\alpha,\alpha$-Bis-(hydroxyphenyl)-diisopropylbenzole sowie die entsprechenden kernalkylierten bzw. kernhalogenierten Verbindungen. Geeignet sind beispielsweise Polycarbonate auf Basis von Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibromphenyl)-propan-2,2 (Tetrabrombisphenol A), Bis-(4-hydroxy-3,5-dimethyl-phenyl)-propan-2,2 Tetramethylbisphenol A), Bis - (4 - hydroxy - 3 - methyl - phenyl) - propan - 2,2, Bis - (4 - hy - droxy-phenyl)-cyclohexan-1,1 (Bisphenol Z) sowie auf Basis von Dreikernbisphenolen wie $\alpha,\alpha$ - Bis - (4 - hydroxy - phenyl) - p -diiso - propylbenzol.

Weitere für die Herstellung von Polycarbonaten geeignete Diphenole sind in den US-Patenten 3 028 265, 2 999 835, 3 148 172, 3 271 368, 2 991 273, 3 271 367, 3 280 078, 3 014 891, 2 999 846 sowie den deutschen Offenlegungsschriften 2 063 050 (Le A 13 359), 2 063 052 (Le A 13 425), 2 211 957 (Le A 14 240) und 2 211 956 (Le A 14 249) beschreiben.

Erfindungsgemäß bevorzugt sind die Polycarbonate aus halogenfreien Diphenolen.

Die erfindungsgemäß hergestellten flammhemmenden Polycarbonate zeichnen sich durch eine im Vergleich zu den herkömmlichen mit monofunktionellen Phenolen abgebrochenen Polycarbonaten verbesserte Flammwidrigkeit aus. So erreichen, die erfindungsgemäßen Polycarbonate je nach Molekulargewicht bzw. Kettenreglergehalt bessere Brandeinstufungen bzw. erheblich kürzere Nachbrennzeiten.

Der Erfindungsgegenstand soll durch die folgenden Beispiele näher erläutert werden.

I. Vergleichsversuche

1. Polycarbonat mit p-tert.-Butylphenol als Kettenabbrecher

Ca. 454 Teile 4,4'-Dihydroxydiphenyl-2,2-propan und 9,5 Teile p-tert-Butylphenol werden in 1,5 l Wasser suspendiert. In einem 3-Halskolben, ausgestattet mit Rührer und Gaseinleitungsrohr, wird der Sauerstoff aus der Reaktionsmischung entfernt, indem unter Rühren 15 min. lang Stickstoff durch die Reaktionsmischung geleitet wird. Dann werden 355 Teile 45%iger Natronlauge und 1000 Teile Methylenchlorid zugegeben. Die Mischung wird auf 25°C abgekühlt. Unter Aufrechterhaltung dieser Temperatur durch Kühlen werden 237 Teile Phosgen während einer Zeitdauer von 120 min. zugegeben. Eine zusätzliche Menge von 75 Teilen einer 45%igen Natronlauge wird nach 15—30 Minuten zugegeben bzw. nachdem die Phosgenaufnahme begonnen hat.

Zu der entstandenen Lösung werden 1,6 Teile Triäthylamin zugegeben und die Mischung weitere 15 Minuten gerührt. Eine hochviskose Lösung wird erhalten, deren Viskosität durch Zugabe von Methylenchlorid reguliert wird. Die wäßrige Phase wird abgetrennt. Die organische Phase wird mit Wasser salzund alkalifrei gewaschen. Das Polycarbonat wird aus der gewaschenen Lösung isoliert und getrocknet. Das Polycarbonat hat eine relative Viskosität von 1,30, gemessen in einer 0,5%igen Lösung von Methylenchlorid bei 20/25°C. Das entspricht ungefähr einem Molekulargewicht von 32 000. Das so gewonnene Polycarbonat wird extrudiert und granuliert.

2. Ein aromatisches Polycarbonat auf Basis von 97,7 Mol-% Bisphenol A und 2,3 Mol-% 4,4' - Dihydroxy - 3,3'-5,5' - tetrachlordiphenyl - propan - 2,2 (Tetrachlorbisphenol A) mit einer relativen Viskosität von $\eta rel = 1{,}33$, $M_{LS} = 34\ 000$, hergestellt gemäß Beispiel 1.

3. Polycarbonat gemäß DT—OS 1 720 812: Ein Polycarbonat aus Bisphenol A mit 3,27 Mol-% 1,3,5-Tribromphenol als Kettenregler, mit einer relativen Viskosität von $\eta_{rel} = 1{,}32$, hergestellt gemäß Beispiel 1.

II. Erfindungsgemäß hergestellte Polycarbonate

4. Aus 3,192 kg 2,2-Bis-(4-hydroxyphenyl)-propan (Bisphenol A) (14 Mol), 2,53 kg 45%iger wäßriger Natronlauge und 15 l destilliertem Wasser wird eine Lösung hergestellt. Nach Zugabe von 34 kg Methylenchlorid werden unter Rühren 80,8 g. Benzolsulfonsäurechlorid (3,27 Mol-%), in 1 kg methylenchlorid gelöst, bei Raumtemperatur zugefügt. Bei 20—25°C werden 2,64 kg Phosgen eingeleitet. Durch Zugabe weiterer 26,3 kg 6,5%iger Natronlauge während der Phosgenierung wird der pH-Wert bei 13—14 gehalten. Anschließend werden 15 ml Triäthylamin zugesetzt und 30 Minuten nachgerührt. Dann wird die obere wäßrige Phase abgetrennt, die organische Phase angesäuert und elektrolytfrei gewaschen. Anschließend wird das Methylenchlorid abgedampft und das Polycarbonat bei 110°C 8 Stunden getrocknet. Die relative Viskosität beträgt $\eta_{rel} = 1{,}32$.

5. Ein Polycarbonat auf Basis von Bisphenol A, hergestellt gemäß Beispiel 4 unter Verwendung von 3,4 Mol-% 3,4-Dichlorbenzolsulfonsäurechlorid mit einer relativen Viskosität von 1,29.

6. Ein Polycarbonat auf Basis von Bisphenol A, hergestellt gemäß Beispiel 4 unter Verwendung von 3,27 Mol-% Naphthalin-2-sulfonsäurechlorid mit einer relativen Viskosität von 1,31.

7. Ein Polycarbonat auf Basis von Bisphenol A mit 3,27 Mol-% 3,4-Dichlorbenzolsulfonsäurechlorid mit einer relativen Viskosität von 1,30, hergestellt gemäß Beispiel 4.

Tabelle

| Polycarbonat aus Beispiel | Brandverhalten nach Underwriters Laboratories Bull. 94 Prüfstab-Dicke 1/16" | Nachbrennzeiten nach der 2. Beflammung in sec. |
|---|---|---|
| I 1 Vergleichsversuch | V 2 | 24 |
| II 4 | V 2 | 11 |
| II 5 | V 1 | 18 |
| II 6 | V 2 | 12 |
| I 2 Vergleichsversuch | V 2 | 22 |
| II 7 | V 1 | 16 |
| I 3 Vergleichsversuch | V 2 | 21 |

Die Messung des Brandverhaltens nach UL Bull 94, Prüfstabdicke 1/16" erfolgte an getemperten Prüstäben (130'C, 2 Tage).

Die Nachbrennzeiten nach der 2. Beflammung sind mit der Stoppuhr ermittelt; Mittelwert aus 5 verschiedenen Messungen.

**Patentansprüche**

1. Verfahren fur Herstellung von aromatischen Polycarbonaten mit mittlerem Molekulargewicht zwischen 10 000 und 100 000 nach dem bekannten Zweiphasengrenzflächenverfahren aus Diphenolen unter Verwendung von Kettenabbrechern, dadurch gekennzeichnet, daß man als Kettenabbrecher aromatische Monosulfonsäurechloride in Mengen von 2 Mol-% bis 20 Mol-%, bezogen auf Mole an eingesetzten Diphenolen, verwendet.

2. Verfahren gemäß Anspruch 1, dadurch gekennzeichnet, daß man die aromatischen Monosulfonsäurechloride in Mengen von 2,5 Mol-% bis 10 Mol-%, bezogen auf Mole an eingesetzten Diphenolen, verwendet.

3. Verfahren gemäß Ansprüchen 1 und 2, dadurch gekennzeichnet, daß man als Diphenole halogenfreie Diphenole verwendet.

4. Aromatische Polycarbonate, erhalten gemäß Verfahren der Ansprüche 1, 2 und 3.

**Claims**

1. A process for the preparation of aromatic polycarbonates, with average molecular weights of between 10,000 and 100,000, from diphenols by the known two-phase interface process, using chain stoppers, characterised in that aromatic mono-sulphonic acid chlorides are used as chain stoppers in amounts of from 2 mol % to 20 mol %, relative to the number of mols of diphenols used.

2. A process according to Claim 1, characterised in that the aromatic monosulphonic acid chlorides are used in amounts of from 2.5 mol % to 10 mol %, relative to the number of mols of diphenols used.

3. A process according to Claims 1 and 2, characterised in that the diphenols used are halogen-free.

4. Aromatic polycarbonates, obtained according to the process of claims 1, 2 and 3.

**Revendications**

1. Procédé de production de polycarbonates aromatiques de poids moléculaire moyen compris entre 10 000 et 100 000, selon le principe connu de réaction à l'interface entre deux phases à partir de diphénols en présence d'agents de terminaison de chaine, caractérisé en ce qu'il consiste à utiliser comme agents de terminaison de chaine des chlorures d'acides monosulfoniques aromatiques en quantités de 2 à 20 moles %, par rapport au nombre de moles de diphénols mis en réaction.

2. Procédé suivant la revendication 1, caractérisé en ce qu'il consiste à utiliser les chlorures d'acides monosulfoniques aromatiques en quantités de 2,5 à 10 miles %, par rapport au nombre de moles de diphénols mis en réaction.

3. Procédé suivant l'une des revendications 1 et 2, caractérisé en ce que les diphénols utilisés sont des diphénols non halogénés.

4. Des polycarbonates aromatiques obtenus par und procédé suivant l'une quelconque des revendications 1, 2 et 3.